# EUROPÄISCHE PATENTSCHRIFT

(11) **EP 3 263 921 B1**
(45) Veröffentlichungstag und Bekanntmachung des Hinweises auf die Patenterteilung: **06.11.2019**
(21) Anmeldenummer: 17175423.7
(22) Anmeldetag: 12.06.2017
(51) Int. Cl.: F16B 37/06, F16B 19/10, F16B 25/00

(54) **BLINDNIETMUTTER, BEFESTIGUNGSANORDNUNG MIT EINER BLINDNIETMUTTER UND BEFESTIGUNGSVERFAHREN**
BLIND RIVET NUT, SECURING ARRANGEMENT HAVING A BLIND RIVET NUT AND SECURING METHOD
ÉCROU DE RIVET AVEUGLE, SYSTÈME DE FIXATION COMPRENANT UN ÉCROU DE RIVET AVEUGLE ET PROCÉDÉ DE FIXATION

(30) Priorität: 01.07.2016 DE 102016212024
(43) Veröffentlichungstag der Anmeldung: 03.01.2018
(73) Patentinhaber: Ford Global Technologies, LLC, Dearborn, MI 48126 (US)
(72) Erfinder: Linsel, Jens, 50767 Köln (DE)
(74) Vertreter: Dörfler, Thomas

(56) Entgegenhaltungen:
- EP-A2- 0 936 362
- DE-A1-102013 101 178
- DE-U- 7 401 302
- US-A1- 2006 045 649
- US-A1- 2014 130 335

## Beschreibung

Die vorliegende Erfindung betrifft eine Blindnietmutter nach dem Oberbegriff des Anspruchs 1, eine Befestigungsanordnung mit einem an einem Träger mittels einer derartigen Blindnietmutter befestigten Bauteil sowie ein Verfahren zur Befestigung eines Bauteils an einem Träger mittels einer derartigen Blindnietmutter.

Eine Blindnietmutter der eingangs genannten Art ist aus US 2006/0045649 A1 bekannt. Zum weiteren Stand der Technik wird auf US 2014/130335 A1, EP 0 936 362 A2 und DE 10 2013 101 178 A1 verwiesen.

Eine Blindnietmutter ist eine Mutter, die dazu bestimmt ist, durch Setzen an einem dünnwandigen Träger, insbesondere einem aus Blech hergestellten Bauteil, fest verbunden zu werden, um diesen mit einem Befestigungsgewinde zu versehen, das zur Befestigung eines Bolzens oder einer Schraube dienen kann. Blindnietmuttern können außerdem dazu dienen, zwei oder mehr dünnwandige Träger bzw. Bauteile miteinander zu verbinden.

Eine Nietmutter umfasst einen Setzkopf, der dazu bestimmt ist, mit einer ersten Seite des Trägers in Kontakt zu kommen, und einen hohlen Schaft, der dazu ausgelegt ist, in ein Durchgangsloch des Trägers eingesetzt zu werden. Der hohle Schaft umfasst einen Klemmabschnitt, der dazu bestimmt ist, unter der Wirkung einer axialen Zugkraft verformt zu werden, um einen Wulst auszubilden, der an der zweiten Seite des Trägers zur Anlage kommt, so dass der Träger eingeklemmt wird, um den Halt der Mutter an dem Träger sicherzustellen. Ferner wird die Mutter blind gesetzt, das heißt, dass die Mutter im Bereich der zweiten Seite des Trägers ohne Zugang zu dieser zweiten Seite gesetzt wird. Im Allgemeinen umfasst der Schaft einer Blindnietmutter einen Gewindeabschnitt zur Aufnahme eines Gewindeelements, wobei das Gewindeelement ermöglicht, die axiale Zugkraft auf den hohlen Schaft auszuüben, die erforderlich ist, um den Klemmabschnitt zu verformen. Dieser Gewindeabschnitt dient später dem Eindrehen einer an der Blindnietmutter zu befestigenden Schraube bzw. eines Bolzens. Solche Blindnietmuttern sind beispielsweise aus der DE 20 2015 100 359 U1, der DE 41 00 709 A1 und der DE 35 13 644 A1 bekannt.

Das Eindrehen des Gewindeelements in den Gewindeabschnitt erfordert ein genaues, gerades Ansetzen und Zentrieren des Gewindeelements am Gewindeabschnitt, damit das Gewindeelement nicht schräg auf das Gewinde aufgesetzt wird und sich infolgedessen beim Eindrehen verklemmt.

Aus der DE 600 23 115 T2 ist ein Verbindungssystem mit einer Hülse zum beabstandeten Halten von Objekten bekannt. Die Hülse wird als Abstandshalter zwischen zwei Bauelementen montiert, indem durch die Hülse eine Schraube geführt ist, die die beiden Bauelemente auf die Hülse presst. Die Hülse weist an einem Ende eine deformierbare Stauchzone aus, die sich durch den Anpreßdruck der beiden Bauelemente spreizt und damit die Hülse an einem Bauelement festlegt.

Vor diesem Hintergrund liegt der vorliegenden Erfindung die Aufgabe zugrunde, eine insbesondere hinsichtlich einer Verwendung bei einer Massenfertigung verbesserte Blindnietmutter bereitzustellen, bei der ein Verkanten und Verklemmen einer an der Blindnietmutter zu befestigenden Schraube oder eines Bolzens beim Eindrehen in die Blindnietmutter weitestgehend vermieden wird. Außerdem sollen eine Befestigungsanordnung und ein Befestigungsverfahren mit denselben vorteilhaften Eigenschaften aufgezeigt werden.

Diese Aufgabe wird gelöst durch eine Blindnietmutter mit den Merkmalen des Anspruchs 1. Anspruch 3 beschreibt eine Befestigungsanordnung mit einer derartigen Blindnietmutter und Anspruch 4 ein Befestigungsverfahren. Eine vorteilhafte Ausgestaltungen der Erfindung offenbart Unteranspruch 2 .

Die Beschreibung charakterisiert und spezifiziert die Erfindung insbesondere im Zusammenhang mit den Figuren zusätzlich.

Erfindungsgemäß umfasst eine Blindnietmutter zum Blindnieten in eine Öffnung eines Trägers, zum Beispiel eines dünnwandigen Blechs, einen ringflanschartigen Setzkopf und einem hohlen Schaft. Der hohle Schaft weist an seinem dem Setzkopf gegenüberliegenden freien Ende einen Gewindeabschnitt zur Aufnahme eines Gewindeelements, beispielsweise einer Schraube oder eines Bolzens, und einen an den Setzkopf angrenzenden Klemmabschnitt auf. Der Klemmabschnitt ist dazu bestimmt, bei einem Setzvorgang der Blindnietmutter an dem Träger wulstartig verformt zu werden, um so den Träger zwischen der wulstartigen Verformung des Klemmabschnitts und dem Setzkopf einzuklemmen. Die Erfindung sieht weiter vor, dass in dem hohlen Schaft zwischen dem Klemmabschnitt und dem Gewindeabschnitt ein weiterer, gewindeloser Schaftabschnitt ausgebildet ist. Dieser gewindelose Schaftabschnitt ist dazu geeignet und ausgebildet, eine gewindeselbstrollende oder gewindeselbstschneidende Schraube oder Bolzen formschließend darin aufzunehmen, wenn diese/dieser in den Schaftabschnitt eingedreht wird.

Als gewindeselbstrollend ist ein spanloses Einbringen eines Gewindes mittels der Schraube oder des Bolzens in den gewindelosen Schaftabschnitt der Blindnietmutter zu verstehen, wenn diese/dieser in den gewindelosen Schaftabschnitt eingedreht wird, wohingegen ein gewindeselbstschneidender Vorgang als spanendes Einbringen des Gewindes mittels der Schraube oder des Bolzens in den gewindelosen Schaftabschnitt der Blindnietmutter aufzufassen ist, wenn diese/dieser in den gewindelosen Schaftabschnitt eingedreht wird. Eine formschlüssige Aufnahme der Schraube bzw. des Bolzens in dem Schaftabschnitt ist dann gegeben, wenn die Schraube bzw. der Bolzen das Gewinde in den gewindelosen Schaftabschnitt eingebracht hat und die Schraube bzw. der Bolzen in dieses Gewinde eingeschraubt ist. Die Schraube bzw. der Bolzen dient beispielsweise der Befestigung eines weiteren Bauteils an der Blindnietmutter bzw. an dem Träger.

Ein besonderer Vorteil der erfindungsgemäßen Blindnietmutter ist, dass die Befestigungsschraube bzw. der Befestigungsbolzen beim Eindrehen in den gewindelosen Schaftabschnitt weder verkanten noch verklemmen kann, da sie/er das Gewinde erst beim Eindrehen in den gewindelosen Schaftabschnitt selbst ausbildet. Außerdem führt der gewindelose Schaftabschnitt in vorteilhafter Weise beim Eindrehen zu einer Selbstzentrierung der Befestigungsschraube bzw. des Befestigungsbolzens in dem gewindelosen Schaftabschnitt der Blindnietmutter.

Der gewindelose Schaftabschnitt weist einen Bohrungsdurchmesser auf, der kleiner ist als jener des Klemmabschnitts und größer als jener des Gewindeabschnitts. Hierdurch ist sichergestellt, dass sich lediglich der Klemmabschnitt mit dem größten Bohrungsdurchmesser bei einem Setzvorgang der Blindnietmutter an dem Träger plastisch verformt, der gewindelose Schaftabschnitt und der Gewindeabschnitt hingegen nicht.

Die Wandstärke des gewindelosen Schaftabschnitts ist derart bemessen, dass sich der gewindelose Schaftabschnitt bei dem Setzvorgang der Blindnietmutter an dem Träger im Wesentlichen nicht plastisch verformt.

Ferner kann die Wandstärke des gewindelosen Schaftabschnitts stets derart bemessen werden, dass ein Innengewinde in diesem Schaftabschnitt roll- oder schneidbar ist. Hierbei können vom Fachmann an sich bekannte Standards zum Ausbilden von Gewinden berücksichtigt und eingehalten werden.

Die Befestigungsanordnung weist ein an einem Träger mittels einer Blindnietmutter befestigtes Bauteil auf, wobei die Blindnietmutter in herkömmlicher Weise in eine Öffnung des Trägers blindgenietet ist und das Bauteil mittels einer Schraube oder eines Bolzens an der Blindnietmutter festgelegt ist. Die Erfindung sieht hierbei vor, dass die Blindnietmutter nach einer der vorhergehend beschriebenen Ausgestaltungen ausgebildet ist. Darüber hinaus ist die Schraube bzw. der Bolzen eine gewindeselbstrollende oder gewindeselbstschneidende Schraube bzw. Bolzen und diese Schraube bzw. dieser Bolzen ist in den vor dem Eindrehen gewindelosen Schaftabschnitt der Blindnietmutter eingedreht, um darin eine formschließende Aufnahme für sich auszubilden.

Weitere Ausgestaltungen der erfindungsgemäßen Befestigungsanordnung, deren Vorteile und Wirkungen ergeben sich unmittelbar aus der vorhergehenden Beschreibung der erfindungsgemäßen Blindnietmutter und können sinngemäß auch auf die Befestigungsanordnung angewendet werden.

Das Verfahren zur Befestigung eines Bauteils an einem Träger mittels einer nach einer der vorstehend beschriebenen Ausgestaltungen ausgebildeten Blindnietmutter weist wenigstens die folgenden Schritte auf:
- Setzen der Blindnietmutter in eine Öffnung des Trägers, so dass der Klemmabschnitt der Blindnietmutter bei dem Setzvorgang der Blindnietmutter wulstartig verformt wird und der Träger zwischen der wulstartigen Verformung des Klemmabschnitts und dem Setzkopf der Blindnietmutter eingeklemmt wird; und
- Befestigen des Bauteils an der Blindnietmutter durch Eindrehen einer Schraube oder eines Bolzens in den vor dem Eindrehen gewindelosen Schaftabschnitt der Blindnietmutter, wobei die Schraube bzw. der Bolzen gewindeselbstrollend oder gewindeselbstschneidend ist, um in dem gewindelosen Schaftabschnitt eine formschließende Aufnahme für sich auszubilden.

Auch hier ergeben sich weitere Ausgestaltungen des erfindungsgemäßen Befestigungsverfahrens, dessen Vorteile und Wirkungen unmittelbar aus der vorhergehenden Beschreibung der erfindungsgemäßen Blindnietmutter und können sinngemäß auch auf das Befestigungsverfahren angewendet werden.

Weitere Merkmale und Vorteile der Erfindung ergeben sich aus der folgenden Beschreibung eines nicht einschränkend zu verstehenden Ausführungsbeispiels der Erfindung, das im Folgenden unter Bezugnahme auf die Zeichnung näher erläutert wird. In dieser Zeichnung zeigen schematisch:
- Fig. 1: eine Querschnittsansicht einer Ausführungsform einer Blindnietmutter gemäß der Erfindung vor einem Setzvorgang an einem Träger,
- Fig. 2: eine Querschnittsansicht der Blindnietmutter aus Fig. 1 nach dem Setzvorgang an dem Träger und
- Fig. 3: eine Querschnittsansicht der an dem Träger gesetzten Blindnietmutter aus Fig. 2, an der ein weiteres Bauteil festgelegt ist.

In den unterschiedlichen Figuren sind hinsichtlich ihrer Funktion gleichwertige Teile stets mit denselben Bezugszeichen versehen, so dass diese in der Regel auch nur einmal beschrieben werden.

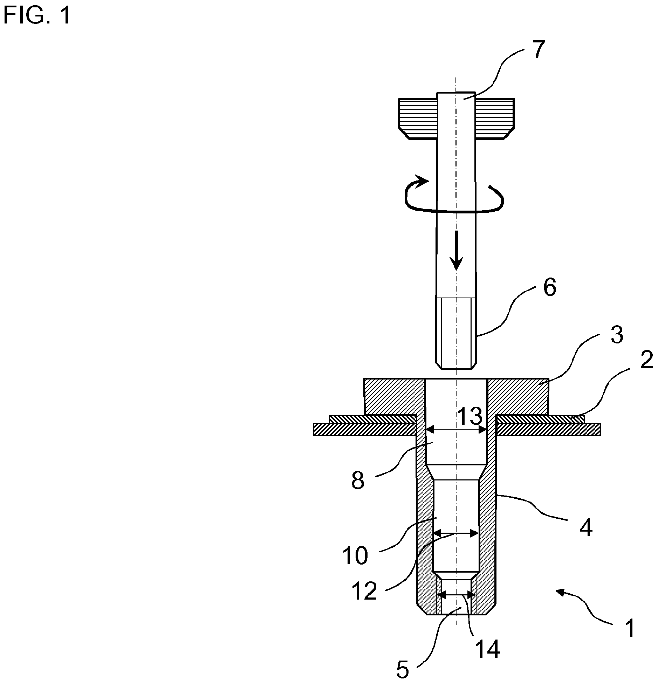

Fig. 1 stellt eine Querschnittsansicht einer Ausführungsform einer Blindnietmutter 1 gemäß der Erfindung vor einem Setzvorgang an einem Träger 2 dar. Fig. 1 ist zu entnehmen, dass die Blindnietmutter 1 einen ringflanschartigen Setzkopf 3 sowie einen hieran angrenzenden und mit diesem einstückig verbundenen hohlen Schaft 4 aufweist.

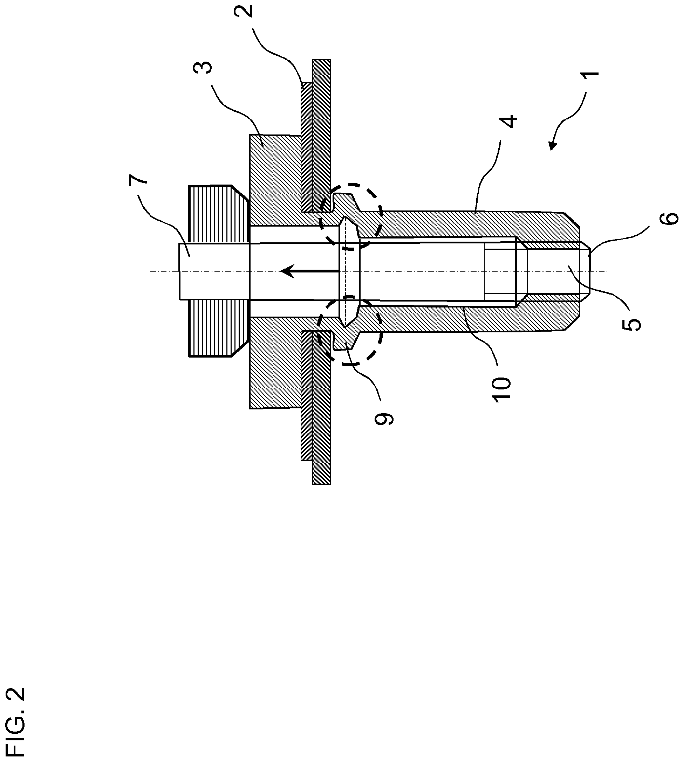

Der hohle Schaft 4 der in Fig. 1 dargestellten Blindnietmutter 1 umfasst an seinem dem Setzkopf 3 gegenüberliegenden freien Ende einen Gewindeabschnitt 5 zur Aufnahme eines Gewindeelements 6, das beispielhaft an einer in Fig. 1 gezeigten Ziehschraube 7 angebracht ist. Die Ziehschraube 7 dient dem Setzen der Blindnietmutter 1 an dem Träger 2, wie anhand von Fig. 2 noch verdeutlicht werden wird.

Des Weiteren weist der hohle Schaft 4 einen an dem Setzkopf 3 angrenzenden Klemmabschnitt 8 auf, der dazu bestimmt ist, bei einem Setzvorgang der Blindnietmutter 1 an dem Träger 2 wulstartig verformt zu werden, um so den Träger 2 zwischen der wulstartigen Verformung 9 (Fig. 2) des Klemmabschnitts 8 und dem Setzkopf 3 einzuklemmen, wie deutlich in Fig. 2 dargestellt ist.

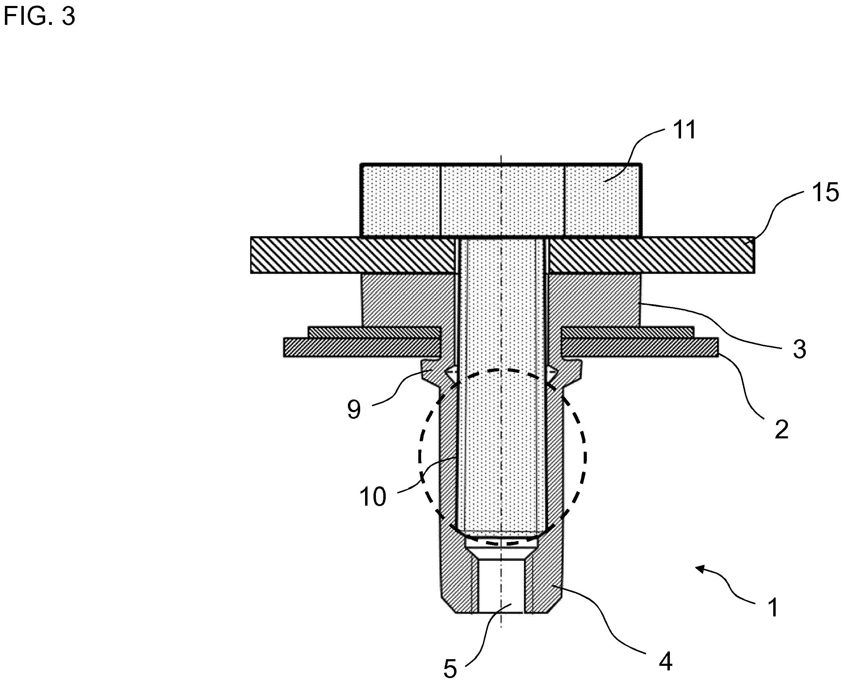

Schließlich ist bei der in Fig. 1 gezeigten Ausführungsform der Blindnietmutter 1 zwischen dem Klemmabschnitt 8 und dem Gewindeabschnitt 5 ein weiterer, gewindeloser Schaftabschnitt 10 ausgebildet. Dieser gewindelose Schaftabschnitt 10 ist zur formschließenden Aufnahme einer gewindeselbstrollenden oder gewindeselbstschneidenden Schraube 11 oder Bolzens geeignet und ausgebildet, wenn diese/dieser in den Schaftabschnitt 10 eingedreht wird, wie deutlich in Fig. 3 dargestellt ist.

In Fig. 1 ist weiterhin zu erkennen, dass der gewindelose Schaftabschnitt 10 einen Bohrungsdurchmesser 12 aufweist, der kleiner ist als jener 13 des Klemmabschnitts 8 und größer als jener 14 des Gewindeabschnitts 5. Da der hohle Schaft 4 der in Fig. 1 gezeigten Blindnietmutter 1 entlang des Klemmabschnitts 8, des gewindelosen Schaftabschnitts 10 und des Gewindeabschnitts 5 im Wesentlichen einen konstanten Außendurchmesser aufweist, ergeben sich somit unterschiedliche Wandstärken für den Klemmabschnitt 8, den gewindelosen Schaftabschnitt 10 und den Gewindeabschnitt 5. Insbesondere ist hierbei die Wandstärke des gewindelosen Schaftabschnitts 10 derart bemessen, dass ein Innengewinde in diesem Schaftabschnitt 10 roll- oder schneidbar ist und sich der gewindelose Schaftabschnitt 10 bei einem Setzvorgang der Blindnietmutter 1 an dem Träger 2 nicht plastisch verformt, sondern lediglich der hierzu bestimmte Klemmabschnitt 8.

Wie in Fig. 1 angedeutet ist, wird zum Setzen der Blindnietmutter 1 an dem Träger 2 zunächst die Blindnietmutter 1 in die entsprechende Öffnung des Trägers 2 eingebracht und anschließend ein geeignetes Setzwerkzeug zum Setzen der Blindnietmutter 1, hier die Ziehschraube 7, verwendet. Hierzu wird das an der Ziehschraube 7 ausgebildete Gewindeelement 6 in den Gewindeabschnitt 5 der Blindnietmutter 1 derart eingedreht, dass diese eine axiale Zugkraft auf den hohlen Schaft 4 der Blindnietmutter 1 ausübt.

Fig. 2 stellt eine Querschnittsansicht der Blindnietmutter 1 aus Fig. 1 nach dem Setzvorgang an dem Träger 2 dar. Deutlich ist zu erkennen, wie der Klemmabschnitt 8 der Blindnietmutter 1 unter der Wirkung der axialen Zugkraft durch die Ziehschraube 7 plastisch verformt wurde. Insbesondere ist in Fig. 2 die wulstartige Verformung 9 des Klemmabschnitts 8 zu erkennen, so dass der Träger 2 nach dem Setzvorgang zwischen der wulstartigen Verformung 9 des Klemmabschnitts 8 und dem Setzkopf 3 eingeklemmt ist.

Fig. 3 stellt eine Querschnittsansicht der an dem Träger 2 gesetzten Blindnietmutter 1 aus Fig. 2 dar, an der ein weiteres Bauteil 15, zum Beispiel ein Blech, mittels der Befestigungsschraube 11 festgelegt ist. Zur Befestigung des Bauteils 15 an der Blindnietmutter 1 bzw. am Träger 2 wird die gewindeselbstrollende oder gewindeselbstschneidende Befestigungsschraube 11 in den vor dem Eindrehen gewindelosen Schaftabschnitt 10 eingedreht, so dass sie in diesen Schaftabschnitt 10 ein Gewinde formt bzw. rollt oder schneidet, in welches die Schraube 11 nach dem Eindrehen formschlüssig aufgenommen ist.

Die erfindungsgemäße Blindnietmutter, die erfindungsgemäße Befestigungsanordnung sowie das erfindungsgemäße Befestigungsverfahren wurden anhand eines in den Figuren dargestellten Ausführungsbeispiels näher erläutert. Die Blindnietmutter, die Befestigungsanordnung und das Befestigungsverfahren sind jedoch nicht auf die hierin beschriebene Ausführungsform beschränkt, sondern umfassen auch gleich wirkende weitere Ausführungsformen.

In bevorzugter Ausführung wird die erfindungsgemäße Blindnietmutter zur Befestigung eines Bauteils an einem Träger mittels einer gewindeselbstrollenden oder gewindeselbstschneidenden Schraube oder Bolzens verwendet.

## Patentansprüche

1. Blindnietmutter mit einem ringflanschartigen Setzkopf (3) und einem hohlen Schaft (4) zum Blindnieten in eine Öffnung eines Trägers (2), wobei der hohle Schaft (4) an seinem dem Setzkopf (3) gegenüberliegenden freien Ende einen Gewindeabschnitt (5) zur Aufnahme eines Gewindeelements (6) und einen an den Setzkopf (3) angrenzenden Klemmabschnitt (8) aufweist, der dazu bestimmt ist, bei einem Setzvorgang der Blindnietmutter an dem Träger (2) wulstartig verformt zu werden, um so den Träger (2) zwischen der wulstartigen Verformung (9) des Klemmabschnitts (8) und dem Setzkopf (3) einzuklemmen,
**dadurch gekennzeichnet, dass**
zwischen dem Klemmabschnitt (8) und dem Gewindeabschnitt (5) ein weiterer, gewindeloser Schaftabschnitt (10) ausgebildet ist, der zur formschließenden Aufnahme einer gewindeselbstrollenden oder gewindeselbstschneidenden Schraube (11) oder Bolzens geeignet und ausgebildet ist, wenn diese/dieser in den gewindelosen Schaftabschnitt (10) eingedreht wird, dass der gewindelose Schaftabschnitt (10) einen Bohrungsdurchmesser (12) aufweist, der kleiner ist als jener (13) des Klemmabschnitts (8) und größer als jener (14) des Gewindeabschnitts (5), und dass die Wandstärke des gewindelosen Schaftabschnitts (10) derart bemessen ist, dass dieser sich bei einem Setzvorgang der Blindnietmutter an dem Träger (2) nicht plastisch verformt.

2. Blindnietmutter nach Anspruch 1,
**dadurch gekennzeichnet, dass**
die Wandstärke des gewindelosen Schaftabschnitts (10) derart bemessen ist, dass ein Innengewinde in diesem Schaftabschnitt (10) roll- oder schneidbar ist.

3. Befestigungsanordnung mit einer Blindnietmutter (1) nach einem der vorhergehenden Ansprüche, umfassend ein an einem Träger (2) mittels der Blindnietmutter (1) befestigtes Bauteil (15), wobei die Blindnietmutter (1) in eine Öffnung des Trägers (2) blindgenietet ist und das Bauteil (15) mittels einer Schraube (11) oder eines Bolzens an der Blindnietmutter (1) festgelegt ist,
**dadurch gekennzeichnet, dass**
die Schraube (11) bzw. der Bolzen gewindeselbstrollend oder gewindeselbstschneidend ist und in den vor dem Eindrehen gewindelosen Schaftabschnitt (10) der Blindnietmutter (1) eingedreht ist, um darin eine formschließende Aufnahme für sich auszubilden.

4. Verfahren zur Befestigung eines Bauteils (15) an einem Träger (2) mittels einer nach Anspruch 1 oder 2 ausgebildeten Blindnietmutter (1), umfassend wenigstens die folgenden Schritte:
- Setzen der Blindnietmutter (1) in eine Öffnung des Trägers (2), so dass der Klemmabschnitt (8) der Blindnietmutter (1) bei dem Setzvorgang der Blindnietmutter (1) wulstartig verformt wird und der Träger (2) zwischen der wulstartigen Verformung (9) des Klemmabschnitts (8) und dem Setzkopf (3) der Blindnietmutter (1) eingeklemmt wird; und
- Befestigen des Bauteils (15) an der Blindnietmutter (1) durch Eindrehen einer Schraube (11) oder eines Bolzens in den vor dem Eindrehen gewindelosen Schaftabschnitt (10) der Blindnietmutter (1), wobei die Schraube (11) bzw. der Bolzen gewindeselbstrollend oder gewindeselbstschneidend ist, um in dem gewindelosen Schaftabschnitt (10) eine formschließende Aufnahme für sich auszubilden.

## Claims

1. Blind rivet nut having an annular-flange-like setting head (3) and a hollow shaft (4) for blind riveting in an opening of a carrier (2), wherein the hollow shaft (4) has at the free end thereof opposite the setting head (3) a threaded portion (5) for receiving a threaded element (6) and a clamping portion (8) which is adjacent to the setting head (3) and which is intended, during a setting operation of the blind rivet nut on the carrier (2), to become deformed in a bead-like manner in order to thus clamp the carrier (2) between the bead-like deformation (9) of the clamping portion (8) and the setting head (3),
**characterized in that**
between the clamping portion (8) and the threaded portion (5) there is formed an additional threadless shaft portion (10) which is suitable and constructed for receiving a thread self-rolling or thread self-tapping screw (11) or bolt in a positive-locking manner when the screw/bolt is screwed into the threadless shaft portion (10), **in that** the threadless shaft portion (10) has a hole diameter (12) which is smaller than the diameter (13) of the clamping portion (8) and greater than the diameter (14) of the threaded portion (5), and **in that** the wall thickness of the threadless shaft portion (10) is sized in such a manner that it does not become plastically deformed during a setting operation of the blind rivet nut on the carrier (2).

2. Blind rivet nut according to Claim 1,
**characterized in that**
the wall thickness of the threadless shaft portion (10) is sized in such a manner that an inner thread can be rolled or cut in this shaft portion (10).

3. Securing arrangement having a blind rivet nut (1) according to either of the preceding claims, comprising a component (15) which is secured to a carrier (2) by means of the blind rivet nut (1), wherein the blind rivet nut (1) is blind-riveted in an opening of the carrier (2) and the component (15) is secured to the blind rivet nut (1) by means of a screw (11) or a bolt,
**characterized in that**
the screw (11) or the bolt is thread self-rolling or thread self-tapping and is screwed into the shaft portion (10) of the blind rivet nut (1) which is threadless before the screwing operation in order to form a positive-locking receiving member therein for itself.

4. Method for securing a component (15) to a carrier (2) by means of a blind rivet nut (1) which is constructed in accordance with Claim 1 or 2, comprising at least the following steps:
- setting the blind rivet nut (1) in an opening of the carrier (2) so that the clamping portion (8) of the blind rivet nut (1) becomes deformed in a bead-like manner during the setting operation of the blind rivet nut (1) and the carrier (2) is clamped between the bead-like deformation (9) of the clamping portion (8) and the setting head (3) of the blind rivet nut (1); and
- securing the component (15) to the blind rivet nut (1) by screwing a screw (11) or a bolt into the shaft portion (10) of the blind rivet nut (1) which is threadless before the screwing operation, wherein the screw (11) or the bolt is thread self-rolling or thread self-tapping in order to form a positive-locking receiving member for itself in the threadless shaft portion (10).

## Revendications

1. Ecrou de rivet aveugle avec une tête de pose (3) du genre d'une bride annulaire et une tige creuse (4) pour le rivetage aveugle dans une ouverture d'un support (2), dans lequel la tige creuse (4) présente à son extrémité libre opposée à la tête de pose (3) une partie filetée (5) destinée à recevoir un élément fileté (6) et une partie de serrage (8) jouxtant la tête de pose (3), qui est destinée à se déformer en forme de bourrelet lors d'une opération de pose de l'écrou de rivet aveugle sur le support (2), afin d'enserrer ainsi le support (2) entre la déformation en forme de bourrelet (9) de la partie de serrage (8) et la tête de pose (3),
**caractérisé en ce qu'**une autre partie de tige sans filet (10) est formée entre la partie de serrage (8) et la partie filetée (5), qui convient et est configurée pour le logement de fermeture de forme d'une vis (11) ou d'un boulon à roulage automatique de filet ou à taille automatique de filet, lorsque celle-ci/celui-ci est vissé (e) dans la partie de tige sans filet (10), **en ce que** la partie de tige sans filet (10) présente un diamètre d'alésage (12), qui est plus petit que celui (13) de la partie de serrage (8) et plus grand que celui (14) de la partie filetée (5), et **en ce que** l'épaisseur de paroi de la partie de tige sans filet (10) est dimensionnée de telle manière que celle-ci ne se déforme pas plastiquement lors d'une opération de pose de l'écrou de rivet aveugle sur le support (2).

2. Ecrou de rivet aveugle selon la revendication 1, **caractérisé en ce que** l'épaisseur de paroi de la partie de tige sans filet (10) est dimensionnée de telle manière qu'un filet intérieur puisse être roulé ou taillé dans cette partie de tige (10).

3. Système de fixation comprenant un écrou de rivet aveugle (1) selon l'une quelconque des revendications précédentes, comprenant une pièce (15) fixée sur un support (2) au moyen de l'écrou de rivet aveugle (1), dans lequel l'écrou de rivet aveugle (1) est rivé à l'aveugle dans une ouverture du support (2) et la pièce (15) est immobilisée sur l'écrou de rivet aveugle (1) au moyen d'une vis (11) ou d'un boulon,
**caractérisé en ce que** la vis (11) ou le boulon est à roulage automatique de filet ou à taille automatique de filet et est vissé (e) dans la partie de tige (10) de l'écrou de rivet aveugle (1) sans filet avant le vissage, afin d'y former un logement de fermeture de forme pour lui/elle-même.

4. Procédé pour la fixation d'une pièce (15) sur un support (2) au moyen d'un écrou de rivet aveugle (1) réalisé selon une revendication 1 ou 2, comprenant au moins les étapes suivantes:
- poser l'écrou de rivet aveugle (1) dans une ouverture du support (2), de telle manière que la partie de serrage (8) de l'écrou de rivet aveugle (1) se déforme en forme de bourrelet lors de l'opération de pose de l'écrou de rivet aveugle (1) et que le support (2) soit enserré entre la déformation en forme de bourrelet (9) de la partie de serrage (8) et la tête de pose (3) de l'écrou de rivet aveugle (1); et
- fixer la pièce (15) sur l'écrou de rivet aveugle (1) par vissage d'une vis (11) ou d'un boulon dans la partie de tige (10) de l'écrou de rivet aveugle (1) sans filet avant le vissage, dans lequel la vis (11) ou le boulon est à roulage automatique de filet ou à taille automatique de filet, afin de former dans la partie de tige sans filet (10) un logement de fermeture de forme pour lui/elle-même.
